# EUROPEAN PATENT APPLICATION

(11) **EP 4 116 017 A2**
(43) Date of publication of application: **11.01.2023**
(21) Application number: 22183689.3
(22) Date of filing: 07.07.2022
(51) Int. Cl.: B22F 10/28, B22F 10/36, B22F 10/37, B22F 12/90, B29C 64/153, B29C 64/393, B33Y 10/00, B33Y 30/00, B33Y 50/02

(54) **CLOSED-LOOP AUTOMATIC SETTING ADJUSTMENTS FOR ADDITIVE MANUFACTURING BASED ON LAYER IMAGING**

(30) Priority: 09.07.2021 US 202163220159 P
(71) Applicant: Howmedica Osteonics Corporation, Mahwah, New Jersey 07430 (US)
(72) Inventor: RUSSELL, Sean, CAHIR, E21 E516 (IE); O'BRIEN, Jeremiah, AHERLOW, E34 W662 (IE)
(74) Representative: Regimbeau

(57) **Abstract**

A fabrication of a build structure by an additive layer manufacturing (1) machine is assessed and controlled. A first portion (152A) of a first material is selectively heated to form a first formed layer (155A) of the build structure having a first thickness. An image of a predefined region of the first formed layer is generated. The image depicts topographical characteristics within the predefined region of the first formed layer. A subsequent portion (152B, 152C, 152D, 152E, 152F) of the first or a second material is selectively heated to form a subsequent formed layer (155B, 155C, 155D, 155E, 155F) of the build structure attached to the first formed layer. The subsequent formed layer has a second thickness that correlates with the depicted topographical characteristics.

## Description

### CROSS-REFERENCE TO RELATED APPLICATION

The present application claims the benefit of the filing date of U.S. Provisional Application No. 63/220,159 filed July 9, 2021, the entirety of the disclosure of which is hereby incorporated herein by reference.

### FIELD

The present invention generally relates to additive manufacturing, and in particular relates to a system for improving the efficiency of the fabrication of components by additive manufacturing (AM) and the quality of those fabricated components.

### BACKGROUND

Additive manufacturing (AM) is increasingly used in the development of new products across many industrial sectors such as the medical and aerospace industries. In some forms of additive manufacturing, high energy beam processing (HEBP) techniques can be used to build three-dimensional (3D) parts as a series of two-dimensional (2D) layers via a layer-wise computer-controlled production process. HEBP machines used in AM, which may be termed high energy beam additive manufacturing (HEBAM) machines, harness the energy of a beam to perform selective sintering or full melting to consolidate material such as metallic powder. In order to be used in a HEBAM machine, a 3D design is modeled and programmatically divided into 2D cross-sectional layers. The design in the form of a set of 2D cross-sections is then imported to a HEBAM machine and successively processed to materialize the 3D design into a physical 3D object.

Among many possible HEBAM machine layouts, a Powder-Bed Fusion (PBF) setup includes a powder deposition system having a moving rake, a roller or other spreading device, and powder containers. In order to process a 2D cross-section, the powder deposition system is used to deposit a powder layer onto a substrate in a machine processing area. A high energy beam, such as an electron beam, i.e., e-beam, or a laser beam, is focused onto a build platform and then deflected using computer-controlled optical lenses for a laser beam setup or electromagnetic lenses for an e-beam setup to trace out the geometry of the 2D cross-section of the 3D design. The energy of the beam causes a specific area of the powder layer within the traced-out geometry to be sintered or fully melted. Upon solidification of the traced-out areas within the current powder layer, the build platform lowers, and a new powder layer is deposited on the machine processing area. Three-dimensional objects can be built layer upon layer through the repetition of powder layer deposition and selective sintering or melting.

In another AM process sometimes referred to as magnetohydrodynamic (MHD) drop-on-demand ejection and liquid droplet deposition, such as the MagnetoJet printing process commercialized by Xerox Corporation, metal wire feedstock is deposited in a molten state from a nozzle in a droplet state onto a heated and moving substrate. Ejected droplets coalesce and solidify upon reaching the substrate or formed layers to form a build structure layer by layer.

Objects, e.g., medical implants, fabricated by AM often having varying cross-sectional areas throughout the object and further may have areas which, due to such variable cross-sectional areas, may have thinner or thicker sections both upon completion of the object and during the fabrication of the object. Thinner sections generally have a reduced ability to dissipate energy such that layers forming such thinner sections as well as subsequent layers in the region of a thinner section may be exposed to higher energy densities applied by the high energy beam. Excessive applied energy can lead to increased internal stress within the object, burning off of trace elements within the power bed, an unstable melt pool, and undesirable deformation and porosity of the object being fabricated.

To compensate, all of the build layers used for the fabrication of an object are generally provided with the smallest thickness required to avoid unacceptable deformation or other quality issues associated with a section of the object that has the smallest or most sensitive details. However, the use of such smaller thicknesses for regions that do not require such thicknesses to meet acceptable standards leads to longer production throughput.

Therefore, there is a need to further improve both part quality and production efficiency for objects fabricated by an AM process.

### BRIEF SUMMARY

In accordance with an aspect, a construct may be fabricated by an additive manufacturing process. In such a process, a first layer of material, such as metallic, polymeric, or ceramic powders or blends thereof, may be deposited onto a substrate of an AM machine or onto a prior layer of material. The first layer of material may be selectively heated, e.g., sintered or melted, by a high energy beam applied by the AM machine, e.g., a laser beam applied by a laser beam AM machine or an e-beam applied by an e-beam AM machine to form a first formed layer. A thermal imaging device, such as an infrared camera, may take an image, e.g., a digital thermal image, of the first formed layer, e.g., at a predetermined time, after the first layer of material is selectively heated and prior to the deposition of a subsequent layer of material. The image may be discretized into a set of image intensity values that may be used to alter parameters associated with the fabrication of an immediately subsequent formed layer. The image intensity values may be based on topographical characteristics depicted within the taken image. In some arrangements such as in an autonomous or semi-autonomous configuration, settings of the AM machine controlling a thickness of the immediately subsequent layer of material may be modified, automatically by a computer processor of the AM machine, based on one or more, and in some arrangements all, of the set of image intensity values and thereby the image such that a powder deposition device of the AM machine deposits onto the prior layer, when the immediately subsequent layer of material is deposited, a different thickness of powder for the immediately subsequent layer of material than the thickness of the first layer of material deposited. In some arrangements, high energy beam settings corresponding to an energy density to be supplied by the high energy beam during formation of the immediately subsequent layer of material may be modified, automatically by a computer processor of the AM machine, based on the set of image intensity values and thereby the image by changing any one or any combination of the power of the beam, the scan speed of the beam, hatch spacing of the beam, i.e., the spacing or negative spacing between successive scans of the beam in a single layer, or other settings controlling the high energy beam (the beam power, scan speed, hatch spacing, and other settings, collectively, "controllable beam settings"). The power of the beam may be modified, for example, by modifying the electrical current or the gas flow in forming the beam. The subsequent layer of material may be selectively heated, e.g., sintered or melted, by a high energy beam to form a subsequent formed layer in which either one or both of the high energy beam has the modified high energy beam settings and the thickness setting for the immediately subsequent layer has been automatically modified from that of the prior layer of material by the AM machine. In some such arrangements, any one or any combination of the controllable beam settings may be altered to different settings during the selective heating of the subsequent layer of material at respective predefined portions of the subsequent layer.

In some arrangements according to any of the foregoing, one or more additional subsequent layers of material, whether deposited before or after the first layer of material in fabricating the construct, may be deposited with a different thickness than a respective preceding layer of material deposited just prior to any such additional subsequent layer of material. In some such arrangements, which may be semi-autonomous arrangements, the thickness of such one or more additional subsequent layers of material may be set manually by a programmer at some point in time which may be prior to the additive manufacturing process for fabricating the construct. In some such arrangements, the programmer may set the thickness of such one or more additional subsequent layers based on images taken of corresponding layers during the fabrication of a same or similar construct to the one being fabricated. In some such arrangements, any one or any combination of the controllable beam settings may be altered to different settings during the selective heating of the subsequent layer of material at respective predefined portions of the subsequent layer.

In some arrangements according to any of the foregoing, the controllable beam settings may be set such that a subsequent area of the subsequent layer of material or additional subsequent layers of material corresponding to a formed layer area of the respective first formed layer or of a preceding formed layer formed from the preceding layer of material determined by a computer processor of the AM machine to be hotter based on the set of image intensity values may be supplied by the high energy beam at a lower energy level than its corresponding respective first formed layer area or preceding formed layer area was supplied by the high energy beam. Similarly, in some arrangements according to any of the foregoing, the controllable beam settings may be set such that a subsequent area of the subsequent layer of material or additional subsequent layers of material corresponding to a formed layer area of the respective first formed layer or of a preceding formed layer formed from the preceding layer of material determined by a computer processor of the AM machine to be cooler based on the set of image intensity values may be supplied by the high energy beam at a higher energy level than its corresponding respective first formed layer area or preceding formed layer area was supplied by the high energy beam.

In accordance with another aspect, a construct may be fabricated by an additive manufacturing process. In such a process, a first layer of material having a first thickness may be deposited onto a substrate or a prior layer of material. The layer of material may be selectively heated to form a first formed layer of the construct. An image, e.g., a thermal image, may be taken of the first formed layer and used to determine a second thickness for a subsequent layer of material to be deposited in which the second thickness is different than the first thickness. The subsequent layer of material may then be deposited onto the first formed layer of the construct with the second thickness. The second thickness may be set automatically by an AM device performing the AM process. The subsequent layer of material may be selectively heated to form a subsequent formed layer.

In some arrangements, one or more additional subsequent layers, whether deposited before or after the first layer of material in fabricating the construct, may be deposited with thicknesses based on images taken of their immediately preceding layers and then selectively heated prior to the deposition of their immediately subsequent layers. In some such arrangements, which may be semi-autonomous arrangements, the thickness of such one or more additional subsequent layers of material may be set manually by a programmer at some point in time which may be prior to the additive manufacturing process for fabricating the construct. In some such arrangements, the programmer may set the thickness of such one or more additional subsequent layers based on images taken of corresponding layers during the fabrication of a same or similar construct to the one being fabricated.

In accordance with another aspect, a construct may be fabricated by an additive manufacturing process using an AM machine. In such a process, the thicknesses of at least some layers of the construct fabricated by the AM machine may vary. Such thicknesses may be preset by a programmer prior to the additive manufacturing process for fabricating the construct. In some arrangements, high energy beam settings corresponding to an energy density to be supplied by the high energy beam may be modified between the formation of one layer and the start of a next layer, automatically, by a computer processor of the AM machine, based on a set of image intensity values determined, by a computer processor of the AM machine, based on an image, e.g., thermal image, of the one layer following the formation of the one layer. The image intensity values may be based on topographical characteristics depicted within the taken image. Such change in high energy beam settings may be any one or any combination of the controllable beam settings described previously herein. In some such arrangements, any one or any combination of the controllable beam settings may be altered to different settings during the selective heating of the subsequent layer of material at respective predefined portions of the subsequent layer.

In accordance with another aspect, the fabrication of a build structure by an additive layer manufacturing machine may be assessed and controlled by a process. In such a process, a first layer of a first material may be set, e.g., deposited or otherwise applied, over a substrate. An entirety of the first layer of the first material when set over the substrate may have a first height in a first direction orthogonal to a plane defined by the substrate. The first layer of the first material may be selectively heated with a first high energy beam to form a first formed layer of a build structure. A first image of a predefined region of the first formed layer may be generated. The first image may depict one or more topographical characteristics within the predefined region of the first formed layer. A subsequent layer of the first material or a second material different from the first material may be set, e.g., deposited or otherwise applied, over the first formed layer. An entirety of the subsequent layer may have a second height different from the first height in the first direction. The second height may be determined based on the depicted topographical characteristics. The subsequent layer may be selectively heated with the first high energy beam or a second high energy beam to form a subsequent formed layer of the build structure over the first formed layer.

In some arrangements in accordance with any of the foregoing, the one or more topographical characteristics may result from applied energy magnitudes of energy applied by the first high energy beam within the predefined region of the first formed layer.

In some arrangements in accordance with any of the foregoing, as appropriate, the substrate may be a platform moveable relative to a fixed platform. In some such arrangements, the substrate may be lowered a first distance relative to the fixed platform to a first position. The substrate may be at the first position during the steps of setting the first layer of the first material over the substrate and selectively heating the first layer of the first material over the substrate. The substrate may be lowered a second distance relative to the fixed platform and different from the first distance to a second position. The substrate may be at the second position during the steps of setting the subsequent layer over the first formed layer and selectively heating the subsequent layer over the first formed layer.

In some arrangements in accordance with any of the foregoing, as appropriate, the subsequent layer may be selectively heated with the first high energy beam. The first high energy beam may be directed from a first energy beam source having the same energy beam settings during the steps of selectively heating the first layer of the first material and selectively heating the subsequent layer.

In some arrangements in accordance with any of the foregoing, as appropriate, the first high energy beam may be directed from a first energy beam source having a first energy beam setting during the step of selectively heating the first layer of the first material. In some such arrangements, the first energy beam setting of the first energy beam source may be altered to a second energy beam setting of the first energy beam source based on the first image. In such arrangements, the first high energy beam may be directed from the first energy beam source having the second energy beam setting during the step of selectively heating the subsequent layer.

In some arrangements, the first and the second energy beam settings may correspond at least in part to first and second powers, respectively, provided by the first energy beam source.

In some arrangements, the first high energy beam may be directed from a first energy beam source having a first power during the step of selectively heating the first layer and the second high energy beam may be directed from the first energy beam source or a second energy beam source during the step of selectively heating the subsequent layer and having a second power during the step of selectively heating the subsequent layer.

In some arrangements, the first energy beam setting may include a first scan speed setting of the first energy beam source corresponding to a first scan speed of the first high energy beam, and the second energy beam setting may include a second scan speed setting of the first energy beam source corresponding to a second scan speed of the first high energy beam.

In some arrangements, the first high energy beam may be directed from a first energy beam source having a first scan speed setting corresponding to a first scan speed of the first high energy beam during the step of selectively heating the first layer and the second high energy beam may be directed from the first energy beam source or a second energy beam source, the second high energy beam having a second scan speed setting corresponding to a second scan speed of the second high energy beam during the step of selectively heating the subsequent layer.

In some arrangements, the first energy beam setting may include a combination of a first scan speed setting of the first energy beam source corresponding to a first scan speed of the first high energy beam and one or more first power input settings corresponding at least in part to, and preferably corresponding wholly to, a first power provided by the first energy beam source. In such arrangements, the second energy beam setting may include a combination of a second scan speed setting of the first energy beam source corresponding to a second scan speed of the first high energy and one or more second power input settings corresponding at least in part to, and preferably corresponding wholly to, a second power provided by the first energy beam source.

In some arrangements, the first high energy beam may be directed from a first energy beam source having a combination of a first scan speed setting corresponding to a first scan speed of the first high energy beam and one or more first power input settings corresponding at least in part to a first power provided by the first energy beam source during the step of selectively heating the first layer. The second high energy beam may be directed from the first energy beam source or a second energy beam source, the second high energy beam having a combination of a second scan speed setting corresponding to a second scan speed of the second high energy beam and one or more second power input settings corresponding at least in part to a second power provided by the one of the first energy beam source or the second energy beam source from which the second high energy beam is directed during the step of selectively heating the subsequent layer.

In some arrangements, a first image intensity value corresponding to one of the one or more depicted topographical characteristics within a first predefined area of the first image may be compared to a first preset intensity value, automatically, via a computer processor. In such arrangements, the second energy beam setting may be set, automatically via a computer processor, based on a difference between the first image intensity value and the first preset intensity value. In this case, the first high energy beam may be directed from a first energy beam source having a first energy beam setting during the step of selectively heating the first layer and the second high energy beam may be directed from the first energy beam source or a second energy beam source during the step of selectively heating the subsequent layer.

In some arrangements, a first image intensity value corresponding to one of the one or more depicted topographical characteristics within a first predefined area of the first image may be determined, automatically, via a computer processor. In such arrangements, the second energy beam setting may be set, automatically via a computer processor, based on the first image intensity value. In this case, the first high energy beam may be directed from a first energy beam source having a first energy beam setting during the step of selectively heating the first layer and the second high energy beam may be directed from the first energy beam source or a second energy beam source during the step of selectively heating the subsequent layer.

In some arrangements in accordance with any of the foregoing, as appropriate, the subsequent layer may be selectively heated with the second high energy beam. In such arrangements, the first high energy beam may be directed from a first energy beam source having a first energy beam setting during the step of selectively heating the first layer of the first material, and the second high energy beam may be directed from a second energy beam source having a second energy beam setting during the step of selectively heating the subsequent layer.

In some arrangements, the first energy beam setting may correspond at least in part to a first power provided by the first energy beam source, and the second energy beam setting may correspond at least in part to a second power provided by the second energy beam source.

In some arrangements, the first energy beam setting may include a first scan speed setting of the first energy beam source corresponding to a scan speed of the first high energy beam, and the second energy beam setting may include a second scan speed setting of the second energy beam source corresponding to a scan speed of the second high energy beam.

In some arrangements, the first energy beam setting may include a combination of a first scan speed setting of the first energy beam source corresponding to a scan speed of the first high energy beam and one or more first power input settings corresponding at least in part to, and preferably corresponding to, a first power provided by the first energy beam source, and the second energy beam setting may include a combination of a second scan speed setting of the second energy beam source corresponding to a scan speed of the second high energy beam and one or more second power input settings corresponding at least in part to, and preferably corresponding to, a second power provided by the second energy beam source.

In some arrangements, a first image intensity value corresponding to one of the one or more depicted topographical characteristics within a first predefined area of the first image may be compared to a first preset intensity value, automatically, via a computer processor. In such arrangements, the second energy beam setting may be set, automatically via a computer processor, based on a difference between the first image intensity value and the first preset intensity value.

In some arrangements, a first image intensity value corresponding to one of the one or more depicted topographical characteristics within a first predefined area of the first image may be determined, automatically, via a computer processor. In such arrangements, the second energy beam setting may be set, automatically via a computer processor, based on the first image intensity value.

In some arrangements in accordance with any of the foregoing, as appropriate, a first image intensity value corresponding to one of the one or more depicted topographical characteristics within a first predefined area of the first image may be compared to a first preset intensity value, automatically, via a computer processor. In such arrangements, the second height may be set, automatically via a computer processor, based on a difference between the first image intensity value and the first preset intensity value.

In some arrangements in accordance with any of the foregoing, as appropriate, a first image intensity value corresponding to one of the one or more depicted topographical characteristics within a first predefined area of the first image may be determined, automatically, via a computer processor. In such arrangements, the second height may be set, automatically via a computer processor, based on the first image intensity value.

In some arrangements in accordance with any of the foregoing, as appropriate, the setting of the first layer of the first material over the substrate may include setting the first material over a prior layer or prior layers of additional material overlying the substrate.

In some arrangements in accordance with any of the foregoing, as appropriate, the one or ones of the first material and the second material selectively heated may be selectively sintered or selectively melted by a laser beam or are selectively melted by an electron beam when selectively heated.

In some arrangements in accordance with any of the foregoing, as appropriate, the first image may be generated for the entire first formed layer.

In some arrangements in accordance with any of the foregoing, as appropriate, the first material may be a first metallic powder and the second material may be a second metallic powder.

In some arrangements in accordance with any of the foregoing, as appropriate, the second height may be a multiple of the first height.

In accordance with another aspect, the fabrication of a build structure by an additive layer manufacturing machine may be assessed and controlled by a process. In such a process, a first portion of a first material may be selectively heated to form a first formed layer of a build structure having a first thickness as measured in a first direction. A first image of a predefined region of the first formed layer may be generated. The first image may depict one or more topographical characteristics within the predefined region of the first formed layer. A subsequent portion of the first material or a second material different from the first material may be selectively heated to form a subsequent formed layer of the build structure attached to the first formed layer. The subsequent formed layer may have a second thickness as measured in the first direction. The second thickness may correlate with the one or more topographical characteristics.

In some arrangements in accordance with any of the foregoing, as appropriate, the one or more topographical characteristics may result from applied energy magnitudes of energy applied by a first high energy beam within the predefined region of the first formed layer.

In some arrangements in accordance with any of the foregoing, as appropriate, a first set of image intensity values corresponding to respective ones of the depicted topographical characteristics within respective ones of a first set of predefined areas of the first image may be compared to a corresponding first set of preset intensity values automatically, via a computer processor. The first set of predefined areas of the first image may correspond to respective portions of the predefined region of the first formed layer. A height of the one of the first material or the second material may be based on a first set of differences between the respective ones of the first set of image intensity values and the first set of preset intensity values. In such arrangements, the second thickness may result from the set height.

In some arrangements, the first set of image intensity values may be stored, by a computer processor, as a first matrix. The first set of preset intensity values may be stored, by a computer processor, as a second matrix. The first set of differences between respective ones of the first set of image intensity values and the first set of preset intensity values may be stored, by a computer processor, as a third matrix.

In some arrangements, the height may be set based on a statistical average of the first set of differences. In some such arrangements, the statistical average may be the mean, median, or mode of the first set of differences between the corresponding ones of the first set of image intensity values and the first set of preset intensity values.

In some arrangements in accordance with any of the foregoing, the first image may be generated by a thermal imaging device.

In some arrangements in accordance with any of the foregoing, as appropriate, selectively heating the first portion of the first material may be or may include a step of selectively heating a first layer of the first material with a first high energy beam and selectively heating the subsequent portion of the first material or the second material may be or may include a step of selectively heating a subsequent layer of the first material or the second material with the first high energy beam or a second high energy beam. In such arrangements, the first high energy beam may be provided by a first energy beam source having a first set of energy beam settings to form the first formed layer of the build structure. The first set of energy beam settings may control a first set of properties of the first high energy beam. The second high energy beam may be provided by the first energy beam source having a second set of energy beam settings or a second energy beam source having the second set of energy beam settings when the subsequent formed layer is formed by the second high energy beam. The second set of energy beam settings may control a second set of properties of the second high energy beam when the subsequent formed layer is formed by the second high energy beam. The first set of properties may be the same types of properties as the second set of properties.

In some arrangements, the first set of energy beam settings may include a first set of power input settings of the first energy beam source, and the second set of energy beam settings may include a second set of power input settings of the respective one of the first energy beam source and the second energy beam source with which the subsequent formed layer is selectively heated. In some such arrangements, each of the first set of power input settings may be set for selectively heating respective predefined portions of the first layer during the formation of the first formed layer of the build structure, and corresponding ones of the second set of power input settings may be set, during the formation of the subsequent formed layer of the build structure, for selectively heating respective predefined portions of the subsequent layer corresponding to the predefined portions of the predefined region of the first formed layer. At least one of the second set of power input settings may be set based on the depicted topographical characteristics such that the at least one of the second set of power input settings may be different from the corresponding one of the first set of power input settings.

In some arrangements, the first set of energy beam settings may control a first scan speed of the first high energy beam, and the second set of energy beam settings may control a second scan speed of the respective one of the first high energy beam and the second high energy beam with which the subsequent formed layer is selectively heated. In some such arrangements, the second scan speed may be based on the depicted topographical characteristics such that the second scan speed may be different from the first scan speed. In such arrangements, selectively heating of the first layer of the first material may include scanning the first layer of the first material at the first scan speed. In such arrangements, selectively heating the one of the subsequent layer of the first material and the first layer of the second material may include scanning the respective one of the first high energy beam and the second high energy beam with which the subsequent formed layer is selectively heated at the second scan speed.

In some arrangements, the first set of energy beam settings may control a first set of scan speeds of the first high energy beam, and the second set of energy beam settings may control a second set of scan speeds of the respective one of the first high energy beam and the second high energy beam with which the subsequent formed layer is selectively heated. In some such arrangements, each of the first set of scan speeds may be set for selectively heating respective predefined portions of the first layer during the formation of the first formed layer of the build structure, and corresponding ones of the second set of scan speeds may be set, during the formation of the subsequent formed layer of the build structure, for selectively heating respective predefined portions of the subsequent layer corresponding to predefined portions of the predefined region of the first formed layer. In some such arrangements, at least one of the second set of scan speeds may be set based on the depicted topographical characteristics such that the at least one of the second set of scan speeds is different from the corresponding one of the first set of scan speeds.

In some arrangements in accordance with any of the foregoing, as appropriate, the first set of image intensity values may be stored, by a computer processor, as a first matrix. The first set of preset intensity values may be stored, by a computer processor, as a second matrix. The first set of differences between respective ones of the first set of image intensity values and the first set of preset intensity values may be stored, by a computer processor, as a third matrix.

In some arrangements in accordance with any of the foregoing, as appropriate, the first material may be a first metallic powder, and the second material may be a second metallic powder. In this manner, in some such arrangements, the first portion and the subsequent portion may be deposited layers of the respective first material and second material.

In some other arrangements in accordance with any of the foregoing, as appropriate, the first material may be first molten material, and the second material may be a second molten material.

In some arrangements in accordance with any of the foregoing, as appropriate, selectively heating the first layer of the first material to form the first formed layer of the build structure may include melting metal powder to a substrate supporting the first layer.

In some arrangements in accordance with any of the foregoing, as appropriate, the formed first layer may be an initial formed layer of the build structure or an intermediate formed layer of the build structure.

In some arrangements in accordance with any of the foregoing, as appropriate, the subsequent layer may be formed directly on the first formed layer.

In some arrangements in accordance with any of the foregoing, as appropriate, the first image may be generated for the entire first formed layer.

In some arrangements in accordance with any of the foregoing, as appropriate, the first image may be taken by multiple cameras. In some such arrangements, each of the cameras may image different portions of the predefined region of the formed first layer.

In accordance with another aspect, the fabrication of a build structure by an additive layer manufacturing machine may be assessed and controlled by a process. In such a process, a first layer of a material may be set onto or over a substrate. An entirety of the first layer of material may have a first height as measured in a first direction. The first layer of the material may be selectively heated with a first high energy beam to form a first formed layer of a build structure. A second layer of the material may be set onto the first formed layer. An entirety of the second layer of the material may have a first height in the first direction. A further layer of the material may be set onto or over the second layer of the material without directing a high energy beam onto the second layer. An entirety of the further layer of the material may have the first height in the first direction. The further layer of the material may be selectively heated with the first high energy beam or a second high energy beam to form a subsequent formed layer of the build structure attached to the first formed layer.

In some arrangements in accordance with any of the foregoing, as appropriate, the first formed layer may have a first thickness and the subsequent formed layer may have a second thickness as measured in the first direction. In some such arrangements, the second thickness may be or may be approximately a multiple of the first thickness.

In some arrangements in accordance with any of the foregoing, as appropriate, the further layer of the material may be deposited over the second layer of the material. In such arrangements, a third layer of the material may be deposited onto the second layer of the material. The third layer of the material may have the first height. The further layer of the material may be deposited onto or over the third layer of the material without directing a high energy beam onto the third layer.

In some arrangements in accordance with any of the foregoing, as appropriate, the first thickness or the first height may correspond to a slice of a computer-aided design (CAD) model of the build structure.

In accordance with another aspect is a control system for use in conjunction with an additive layered manufacturing machine in assessing and controlling a fabrication of a build structure formed in build layers on a substrate. Such a control system may include a thermal imaging device, a monitoring controller device, and a beam controller. The thermal imaging device may be configured to capture respective thermal images of each of one or more image-designated build layers of the build layers of the build structure at respective predetermined times after completion of each of the image-designated build layers and prior to the start of the formation of each of subsequent one or more of the build layers to be formed directly onto each completed one of the image-designated build layers. The thermal imaging device may be further configured to digitize the thermal images as thermal imaging data. The monitoring controller device may be configured for receiving and interpreting, by one or more processors, sensor electrical signals from the thermal imaging device corresponding to the thermal imaging data. The monitoring controller device may include a data logger that may be configured to store logged thermal data corresponding to the thermal imaging data for at least a last completed one of the image-designated build layers at an associated one of the predetermined times as a matrix of thermal energy values corresponding to respective build locations within the last completed one of the image-designated build layers. The beam controller may be configured for receiving and interpreting instructional electrical signals transmitted by the monitoring controller based on differences between the logged thermal data and preset thermal data values. The beam controller may be further configured for transmitting, based on the received and interpreted instructional electrical signals, beam control electrical signals to modify a setting of a high energy beam generation apparatus. The modified setting of the high energy beam generation apparatus may cause an alteration of either one or both of i) a preset first level of a first property of a high energy beam generated by the high energy beam generation apparatus during the last completed one of the image-designated build layers to a second level of the first property of the high energy beam generated by the high energy beam generation apparatus to be used for the formation of an immediately subsequent build layer to the last completed one of the image-designated build layers and ii) a preset first height of a layer of a first material overlying the substrate used during the last completed one of the image-designated build layers to a second height of a layer of the first material or a second material different from the first material to be used for the formation of the immediately subsequent build layer.

In some arrangements, image-designated build layers may be layers preset to be imaged prior to a build of the build structure.

In some arrangements in accordance with any of the foregoing, as appropriate, the modified setting of the high energy beam may cause an alteration of the preset first height of the layer of the first material to the second height of the layer of one of the first material or the second material.

In some arrangements in accordance with any of the foregoing, as appropriate, each of the respective thermal images may correspond to a heat intensity across at least a portion of a respective one of the image-designated build layers. In some such arrangements, the thermal images may be stored only for a single layer. In some other such arrangements, the thermal images may be stored for all layers.

In some arrangements in accordance with any of the foregoing, as appropriate, the respective build locations may be predefined discretized locations within the last completed one of the image-designated build layers.

In some arrangements in accordance with any of the foregoing, as appropriate, the first material may be a first metallic powder, and the second material may be a second metallic powder.

### BRIEF DESCRIPTION OF THE DRAWINGS

A more complete appreciation of the subject matter of the present invention and various advantages thereof may be realized by reference to the following detailed description, in which reference is made to the following accompanying drawings, in which:
FIG. 1 is a schematic illustration of an additive manufacturing device in accordance with an embodiment;
FIGS. 2A-2C are cross-sectional views of a build chamber showing a fabrication of a set of constructs in accordance with an embodiment; and
FIGS. 3 and 4 are process flow diagrams of processes for assessing and controlling the fabrication of a build structure by an additive layer manufacturing machine in accordance with separate embodiments.

### DETAILED DESCRIPTION

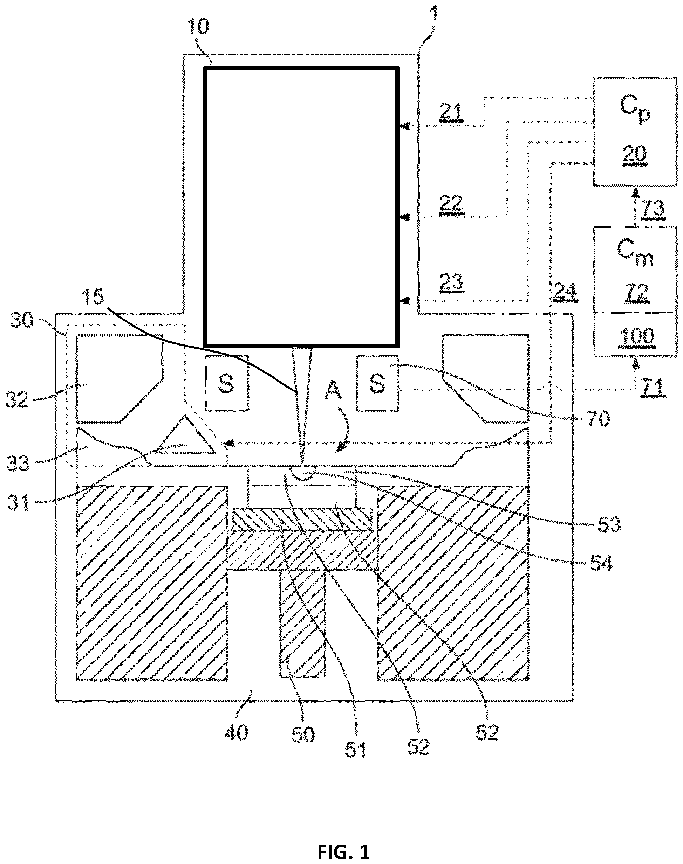

Referring to the drawings, as shown in FIG.1, additive manufacturing (AM) device 1 includes laser beam generation apparatus 10, but a device consistent with the present disclosure may be one configured with an electron beam generation apparatus that generates an electron beam, as described for example in U.S. Patent Application Publication No. 2020/0023435 A1, the entire disclosure of which is hereby incorporated by reference herein, or may be embodied in other forms and should not be construed as being limited to the embodiments set forth herein. In the example shown, laser beam generation apparatus 10 generates laser beam 15 and is at least partially contained in vacuum chamber 40 which maintains a substantially vacuum environment. While part of apparatus 10 may be positioned outside chamber 40 for access and electrical connectivity, the beam generation apparatus is configured for generating and transmitting laser beam 15 within the vacuum environment, as well as for directing the beam towards powder bed 53.

AM device 1 further includes, among other components as well-known to those skilled in the art, build platform 50, powder deposition system 30, one or more sensors 70, monitoring controller 72, and machine process controller 20. Build platform 50 supports substrate 51 during a build of a construct, e.g., a medical implant. In operation, a layer of material, which may be conductive powder 33 gathered to form powder bed 53, is placed upon substrate 51 and selectively heated to form one layer of the construct to be formed. Upon the completion of heating of the one layer of the construct, build platform 50 moves downward within a build chamber to allow a successive power bed layer to be deposited onto the newly completed layer by powder deposition system 30. In this manner, as further shown in FIG.1, successive fused layers 52 are formed over substrate 51 supported by build platform 50 until the construct to be formed is completed.

More specifically, in this example, a three-dimensional (3D) construct is formed by progressively melting conductive powder 33 to form liquid melt zone 54 and cooling the melt zone into fused layers 52 on substrate 51. Liquid melt pool 54 is formed by selectively beam-melting powder 33, e.g., suitable powder such as but not limited to titanium, titanium alloys, stainless steel, cobalt chrome alloys, gold, silver, tantalum, and niobium. Powder deposition system 30 includes powder container 32 which stores powder 33 and powder feeder 31 which uniformly deposits the powder, e.g., with a rake or a roller or other suitable powder delivery mechanisms having a controlled speed, on top of substrate 51 for the first layer 52 and then onto previous layers 52 for successive powder depositions. In this example, powder feeder 31 obtains powder 33 from powder containers 32 on opposite sides of substrate 51. While not shown in FIG.1 for simplicity, vacuum chamber 40 may be evacuated using a vacuum subsystem, e.g., turbo-molecular pump, ducts, valves etc., as understood by those skilled in the art. Sintering or full melting of powder 33 may be carried out based on a set of design data, e.g., computer-aided design (CAD) data or other 3D design files, imported to process controller 20. In some arrangements, the 3D design data is divided into a set of successive 2D cross-sections, e.g., slices, by process controller 20 to create design data usable for the fabrication process or is provided to the process controller already divided into such slices. According to the information contained in the design data useable for the fabrication process, process controller 20 commands beam generation apparatus 10 to direct laser beam 15 towards processing area A and thereby sinter or fully melt selective regions on powder bed 53 by setting suitable process parameters on beam generation apparatus 10.

Still referring to FIG.1, in providing an in-situ process monitoring and control system for AM device 1, process controller 20 may be electrically connected to one or multiple sensors 70, as in the example shown, to detect and measure one or more specific process features of interest of powder bed 53 and liquid melt zone 54. The information received by sensors 70 corresponding to the process features of interest is relayed to monitoring controller 72, which is connected to process controller 20 as a set of sensor data 71. Monitoring controller 72 receives, and in some arrangements stores within computer memory of the monitoring controller, sensor data 71 and performs one or more algorithms, represented collectively as algorithm 100 in FIG. 1, to interpret the sensor data relative to user-defined parameters.

Monitoring controller 72 transmits electrical signals to process controller 20 to modify process parameters 21-24 for AM device 1 as needed. For example, monitoring controller 72 may transmit electrical signals to process controller 20 to either one or both of alter the powder deposition rate of powder feeder 31 and laser beam properties by modifying the settings of beam generation apparatus 10.

Monitoring controller 72 may be configured to operate as an integrating system which consists of components responsible for process data collection, storage, interpretation, comparison, and information or instructional digital signal generation. High-speed data acquisition boards may be used for real-time acquisition of large volumes of process data associated with a high-speed time-series feedback signal and digital images, e.g., those generated by a thermal imaging device. Monitoring controller 72 may include sufficient read only memory (ROM), random access memory (RAM), electronically-erasable programmable read only memory (EEPROM), etc., of a size and speed sufficient for executing algorithm 100 as set forth below. Monitoring controller 72 may also be configured or equipped with other required computer hardware, such as a high-speed clock, requisite analog-to-digital (A/D) and digital-to-analog (D/A) circuitries, any necessary input or output circuitries and devices (I/O), as well as appropriate electrical signal conditioning and/or buffer circuitry. Any algorithms resident in AM machine 1 or accessible thereby, including algorithm 100, as described below, may be stored in memory and automatically executed to provide the respective functionality.

In the example shown in FIG. 1, algorithm 100, which may be embodied as a single algorithm or multiple algorithms, is automatically executed by monitoring controller 72 to interpret sensor data 71 and by process controller 20 on AM device 1 to modify process parameters during the AM process. Interpretation of sensor data 71 by monitoring controller 72 identifies an appropriate action to be taken and determines input parameters 73, which may be transmitted as a set of input parameters, to be sent from monitoring controller 72 to process controller 20, needed to modify process settings, in order to maintain part quality and process efficiency, in which in some arrangements such settings may be limited by preset limits stored in the monitoring controller or the process controller. Process controller 20 transmits electrical signals corresponding to process parameters 21-23 to beam generation apparatus 10 to modify settings of the beam generation apparatus and transmits electrical signals corresponding to process parameter 24 to powder deposition system 30 to modify settings of the powder deposition system. In this manner, a closed-loop process feedback control is formed between monitoring controller 72, working with process controller 20, and system components, e.g., beam generation apparatus 10, powder deposition system 30, etc., of AM device 1 to allow for a real-time modification to final control parameters 21-24.

The process features of interest to be monitored across the processing area, as indicated by arrow A in FIG. 1, during the AM process are associated with one or more sensors 70. In some arrangements, sensors 70 may be integrated into AM device 1 and operated independently or in combination with each other depending on the particular application. As further shown in FIG. 1, in some arrangements, one or more of sensors 70 may be mounted inside vacuum chamber 40. In some arrangements, sensors 70 may be one or multiple thermal imaging devices, which may be thermographic cameras, e.g., infrared cameras. Images obtained from thermal imaging devices may correspond to any one or any combination of a temperature of powder bed 53, a temperature of liquid melt zone 54, a temperature of solidified melted surface 65.

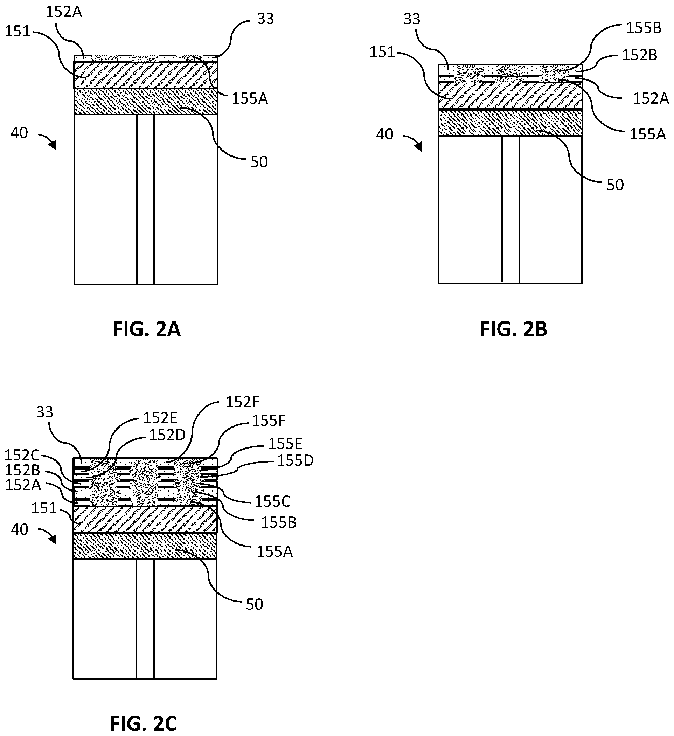

Referring now to FIGS. 2A-2C, in one example which is not to be construed as limiting, first layer 152A of powder 33 having a first thickness is deposited on substrate 151 supported by build platform 50 and then selectively melted to form first formed layers 155A of a set of constructs to be prepared. In this example, three separate constructs are being prepared simultaneously. A thermal image of one or all of first formed layers 155A is taken and digitized into thermal imaging data 71 by thermal imaging device 70.

In some arrangements, the thermal image is taken of a predefined region, or preferably the entirety of, first formed layers 155A and remaining unmelted powder 33 from first layer 152A at a predetermined time, which may be for example following the completion of the first formed layers and prior to the deposition of second layer 152B of powder 33. Thermal imaging data 71 associated with the entirety of first formed layers 155A and remaining unmelted powder 33 from first layer 152A is received by monitoring controller 72 and stored in a data logger of, or in electrical communication with, the monitoring controller.

Monitoring controller 72 may convert thermal imaging data 71 into a greyscale image and generate a first matrix of a first set of image intensity values, corresponding to depicted topographical characteristics detected by the thermal imaging data across the imaged area, according to individual pixels in the image in which the pixels are assigned a value of 0-255 based on RGB values as known to those skilled in the art. In this example, each pixel is located at a discrete location within the image that is the size of the individual pixel. Variations in the depicted topographical characteristics and thus variations in the image intensity values of the first set of image intensity values derived from thermal imaging data 71 result from variations in topographical characteristics of formed layers caused by variations in applied energy magnitudes of energy applied by beam 15 in forming an imaged formed layer. The first set of image intensity values are then compared by the monitoring controller using algorithm 100 or portion, i.e., steps, of algorithm 100, such as by a digital comparator, to a first set of preset intensity values within a second matrix assigned to a corresponding location within the first matrix associated with each of the first set of image intensity values. In some arrangements, the second matrix also may be stored in the data logger of the monitoring controller. The locations within the first matrix may correspond to the locations of the pixels within the image. The first set of preset intensity values may be values assigned according to the locations at which the next powder layer is to be selectively heated, in this example melted. In some arrangements, the first set of preset intensity values may be determined and stored in monitoring controller 72 based on empirical data derived through prior fabrications of the constructs to be prepared. Based on the comparisons between the first set of image intensity values and the first set of preset intensity values, monitoring controller 72 may determine a percentage increase or decrease in beam energy needed within horizontal locations, i.e., locations within an area parallel to substrate 51, of the subsequent build layer corresponding to the respective horizontal locations within first formed layers 155A and remaining unmelted powder 33 from first layer 152A to which the pixels of the greyscale image are associated. In this manner, less energy may be applied to areas that may be subjected to otherwise relatively high applied energy magnitudes to avoid part deformation or other non-compliant part or process characteristics while more energy may be applied to areas that may be subjected to otherwise relatively low applied energy magnitudes in order to ensure adequate melting to prevent porosity caused by a lack of melt pool formation in desired areas. Applying less energy through either one or both of an increase in scan speed and an increase in hatch spacing may decrease processing time and thereby increase production throughput.

In some arrangements, if an image intensity value for one horizontal location falls below a low threshold for that location or exceeds a high threshold for that location, then the high energy beam may be applied with a corresponding higher or lower relative energy density. In some such arrangement, if an image intensity value for one horizontal location or for another set number of horizontal locations falls outside of a range that includes the low and the high thresholds for that location, the monitoring controller may instruct the AM machine to stop the fabrication of constructs that is in process.

Once the percentage increase or decrease in beam energy is determined, monitoring controller 20 sends input parameters 73 to process controller which in turn determines process parameters 21-23 to be sent to beam generation apparatus 10 in order to modify settings of beam generation apparatus 10 for the selective melting of the subsequent build layer. Process parameters 21-23 may include beam power 21, scan speed 22, or another parameter 23, e.g., hatch spacing, affecting beam generation apparatus 10. In this manner, in some arrangements, beam generation apparatus 10 may apply laser beam 15 either one or both with more or less power and at greater or lesser scan speeds at predefined regions of the subsequent build layer. For example, the beam power may be set at 100 W with a scan speed of 500 mm/s at a first horizontal location in forming first formed layers 155A and a beam power set at 200 W with a scan speed of 200 mm/s at a second horizontal location in forming first formed layers 155A. Based on the image intensity values of the first and second locations from the image taken by thermal imaging device 70 and the given preset intensity values at these locations, monitoring controller 72 may provide input parameters 73 to process controller 20 which in turn may determine appropriate process parameters 21-23 to direct beam generation apparatus 10 to apply beam 15 with a power of 75 W and a scan speed of 400 mm/s at the first horizontal location and a power of 250 W and a scan speed of 250 mm/s at the second horizontal location in forming second formed layers 155B. In the same manner, each subsequent layer of powder may be imaged immediately following the processing of each such layer and thermal imaging data derived from those images may be used by monitoring controller 72 to determine input parameters 73 for process controller 20 such that the controllable beam settings, e.g., beam power and scan speed, at various locations for successive layers are altered based on the images taken to lower beam energy applied to areas that may be subjected to otherwise relatively high applied energy magnitudes to avoid part deformation or other non-compliant part or process characteristics while raising beam energy applied to areas that may be subjected to otherwise relatively low applied energy magnitudes in order to ensure adequate melting to prevent porosity caused by a lack of melt pool formation in desired areas.

With reference to FIG. 2B, based on the comparisons between the first set of image intensity values corresponding to depicted topographical characteristics derived in forming first formed layers 155A and the first set of preset intensity values, a thickness of second layer 152B of powder 33 to be deposited on the remaining powder of first layer 152A and first formed layers 155A also may be altered automatically by instructions 24 in the form of electrical signals sent from process controller 20 to deposition system 30 of AM device 1. In the example shown, based on the comparisons, process controller 20 instructed deposition system 30 to have powder container 32 deposit a thicker layer of powder 33 for second layer 152B than was deposited for first layer 152A. Similarly, and with particular reference to FIG. 2C, second formed layer 155B may be imaged by thermal imaging device 70 and then each of additional layers 152C-152F of powder 33 may be deposited and formed additional layers 155C-155E may be imaged successively before subsequent such layers are deposited such that the thicknesses of such additional layers 152C-152F may be set appropriately based on the image intensity values determined by monitoring controller 72. As shown, the thicknesses of each deposited layer 152A-152F may vary from one or more other ones of such deposited layers.

In some arrangements, to determine the thicknesses of subsequent layers of powder, such as second layer 152B and additional layers 152C-152F, a portion, i.e., additional steps, of algorithm 100 may be applied by monitoring controller 72 based on thickness input parameters. Such thickness input parameters always include a value associated with a thickness of a feature that will be formed in part by the subsequent layer being deposited and may include values corresponding to any one or any combination of beam power, beam scan speed, and beam hatch spacing, and the thickness of the layer of powder 33 just deposited. In some arrangements, which may be fully autonomous arrangements, thicknesses of each subsequent layer, e.g., layers 152B-152F, used in forming complete constructs, may be determined automatically by monitoring controller 72. In some arrangements, which may be semi-autonomous arrangements, thicknesses of some subsequent layers, e.g., some of layers 152B-152F, may be determined automatically by monitoring controller 72 while the thicknesses of other layers, such as the thicknesses of other layers of layers 152B-152F not determined automatically, may be preset by a programmer prior to the fabrication of the constructs. In some such arrangements, thermal imaging device 70 may be programmed not to take images of one or more formed layers when the thicknesses of the successive layers of such one or more formed layers is preset. However, thermal imaging device 70 may still take an image of any formed layer if a thickness of its successive layer is preset in some arrangements, such as when the image may be used for altering of controllable beam settings as described previously herein. In some fully manual thickness arrangements, the thicknesses of each of the deposited layers, e.g., layers 152B-152F, of powder 33 may be preset prior to the fabrication of the constructs. In such arrangements, thermal imaging device 70 may not be employed or may be employed for other purposes, such as for the alteration of the controllable beam settings. In any of these arrangements, preset thicknesses may be programmed based on empirical data from prior builds, experimentation, modeling data, or other methodologies.

In some arrangements, any one or any combination of the controllable beam settings, e.g., beam power, scan speed, hatch spacing, may be altered for all areas of a subsequent layer to be formed based on the image intensity values determined from the prior layer. In still further arrangements, the controllable beam settings as well as the thickness of the powder layer to be deposited for the subsequent layer to be formed may be altered based on the image intensity values determined from the prior layer. In some arrangements, only the thickness, and not any of the controllable beam settings or other parameters of beam generation apparatus 10, may be altered for the subsequent layer based on the image intensity values determined from the prior layer. It is to be understood that the ability to modify the controllable beam settings and the thicknesses of layers during a build process can also be useful in compensating for deterioration of aspects of AM device 1, e.g., laser beam degradation over time, small gas leaks, substrate deterioration, and other wear issues. In this manner, this ability prolong the period before maintenance of AM device 1 is needed and thereby reduce downtime and may even prolong the useful life of the AM device.

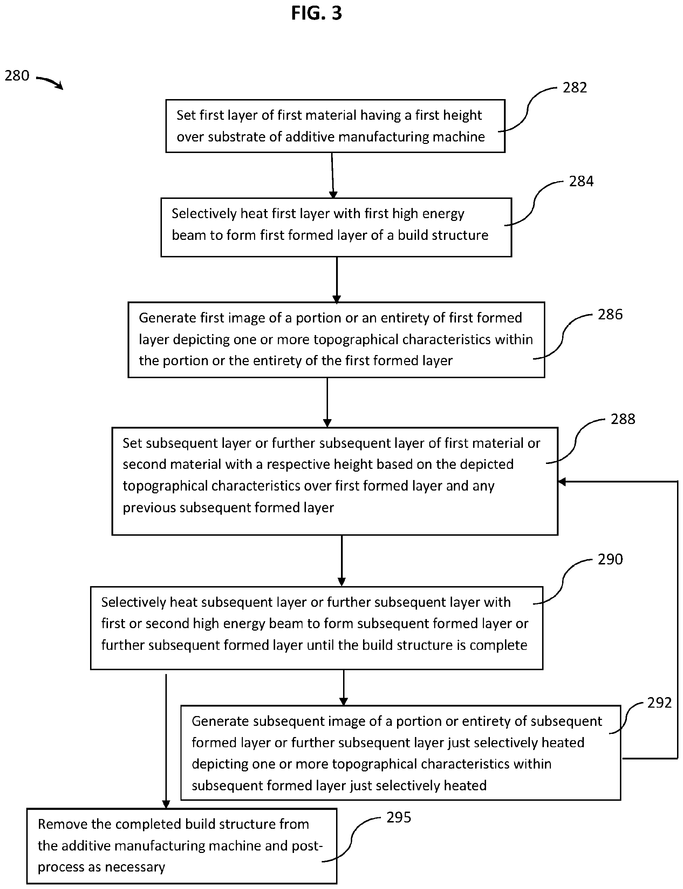

Referring now to FIG. 3, a fabrication of a build structure by an additive layer manufacturing machine may be assessed and controlled in a process 280. In a step 282 of process 280, a first layer of a first material having a first height may be set, e.g., deposited, over, and in some arrangements onto, a substrate of an additive manufacturing machine. In a step 284, the first layer of the first material may be selectively heated with a first high energy beam to form a first formed layer of the build structure. In a step 286, a first image of a portion or of an entirety of the first formed layer may be generated to identify one or more applied energy magnitudes within the respective portion or entirety of the first formed layer. In a step 288 which is repeated until the last layer is set, a subsequent layer or further subsequent layer of first material or second material may be set, e.g., deposited, over the first formed layer and any previous formed layer and have a respective height based on the depicted topographical characteristics. In a step 290 which is repeated until completion of the build structure, the subsequent layer may be selectively heated with the first or a second high energy beam to form a subsequent formed layer or a further formed layer. In a step 292, a subsequent image of a portion or an entirety of a subsequent formed layer just selectively heated may be generated to depicted topographical characteristics with the subsequent formed layer just selectively heated. Once the build structure is complete at step 290, at step 295, the completed build structure may be removed from the additive manufacturing machine, and if necessary, post-processed, e.g., either one or both of heat treated and polished.

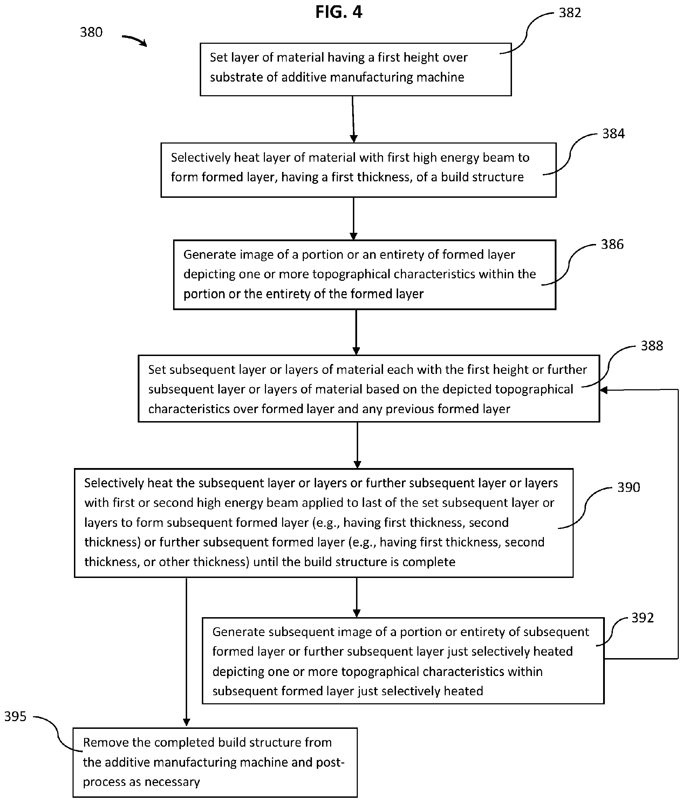

Referring now to FIG. 4, in a similar arrangement, a fabrication of a build structure by an additive layer manufacturing machine may be assessed and controlled in a process 380. In a step 382 of process 380, a first layer of a material having a first height may be set, e.g., deposited, over, and in some arrangements onto, a substrate of an additive manufacturing machine. In a step 384, the first layer of the material may be selectively heated with a first high energy beam to form a first formed layer of the build structure. The first formed layer may have a first thickness. In a step 386, a first image of a portion or of an entirety of the first formed layer depicting one or more topographical characteristics within the respective portion or entirety of the first formed layer may be generated. As described previously herein, in some arrangements, the one or more depicted topographical characteristics may result from applied energy magnitudes of energy applied by the first high energy beam. In a step 388 which is repeated until the last layer or set of layers of the build structure to be selectively melted is set, a subsequent layer or set of subsequent layers of the material may be set, e.g., deposited, over the first formed layer and any previous formed layer. The subsequent layer or each subsequent layer of the set of subsequent layers of the material may have the first height such that a height of the set of subsequent layers of the material may be a multiple of the first height. For example, the first layer of material may be set with a height of 25mm and each subsequent layer may be set with a height of 25mm such that a set of three subsequent layers of the material has a height of 75mm. In some arrangements, this height may correspond to a slice of a computer-aided design (CAD) model of the build structure used in preparing a file for use by the additive manufacturing machine, e.g., .STL or g-code files.

In a step 390 which is repeated until completion of the build structure, the subsequent layer or set of subsequent layers may be selectively heated with the first or a second high energy beam to form a subsequent formed layer or a further formed layer. In this setup, only the last layer of a set of subsequent layers of material is selectively heated by the high energy beam and the high energy beam is not directly applied onto the prior layers of the set of subsequent layers set during step 388. The subsequent formed layer may have approximately the same thickness as the first formed layer or a second thickness, e.g., one that is a multiple of the first thickness when the subsequent formed layer is formed from a set of subsequent layers of material having a height that is a multiple of the first height. In a step 392, a subsequent image of a portion or an entirety of a subsequent formed layer just selectively heated and layer depicting one or more topographical characteristics within that layer may be generated. Once the build structure is complete at step 390, at step 395, the completed build structure may be removed from the additive manufacturing machine, and if necessary, post-processed, e.g., either one or both of heat treated and polished.

In some alternative arrangements, any one of the subsequently deposited layers of material used in the fabrication of the build structure may be selectively heated by a second energy beam rather than the first energy beam used to heat the first layer of a build construct. In operation, the second energy beam may be controlled by process controller 20 or may be controlled by a second process controller in the same manner as the first energy beam 15 such that the applied energy onto a build layer from the second energy beam may be based on depicted topographical characteristics determined for a prior layer as well as other preset process parameters as described previously herein.

In some alternative arrangements, any one of the subsequently deposited layers of material used in the fabrication of the build structure may be made of a different material than the deposited material used for a prior layer where fabrication of such different material is compatible with the material used in the prior layer and the fabrication and use of such material in the prior layer. For example, the material used for one layer may be titanium or a titanium alloy while the material used for an immediately subsequent layer may be silver or a silver alloy. In such arrangements, powder deposition system 30 may include multiple powder containers 32 in which each container may contain a different powder than another one of the powder containers.

In some alternative arrangements, polymeric, other plastic materials, ceramic, cermet, or other suitable materials may be employed in conjunction with an AM device in which either one or both of beam parameters such as beam power and beam scan speed may be altered within one region of a layer and from layer to layer based on thermographic images and powder thickness may be altered from one layer to the next as described previously herein.

In some alternative arrangements in which multiple thermographic cameras 70 are used, each camera may take images of only a portion of a processing area. Thermal imaging data 71 from each camera may be received by monitoring controller 72 to determine intensity values associated with the imaged area that are to be compared to the preset intensity values.

In other embodiment, AM device 1 may be replaced by a device providing MHD drop-on-demand ejection and liquid droplet deposition on a moving substrate, such as the MagnetoJet printing process commercialized by Xerox Corporation. This system is described for example in Sukhotskiy, et al., "Liquid Metal 3D Printing," Flow-3D: Solving the World's Toughest CFD Problems, the disclosure of which is hereby incorporated herein by reference. In such an embodiment, one or more layers, and preferably each of the layers, deposited by the MHD device may be imaged, such as by thermal imaging device 70. Based on the thermal imaging data, in an analogous manner to monitoring controller 72 and process controller 20 of AM device 1, one or more controllers of the MHD device may direct changes to the process parameters of the MHD device. For example, the one or more controllers of the MHD device may direct more or less current through coil windings of the MHD device through which metal feedstock, e.g., wire from an aluminum spool, is fed in order to apply more or less relative energy in the form of heat to the metal feedstock. In another example, the one or more controllers of the MHD device may direct more or less current through coils extending along a substrate onto which a build structure is built such that the substrate applies more or less heat to the build structure. In still another example, the one or more controllers of the MHD device may direct the deposition of a greater amount of droplets at a time while building the build structure or a different amount of feedstock to be heated a given time. Any of these options may be applied in combination with any of the other options for any given layer, whether based on a digital image taken during production or programmed pre-production. In this manner, part quality and production efficiency may be improved.

It is to be understood that the disclosure set forth herein includes any possible combinations of the particular features set forth above, whether specifically disclosed herein or not. For example, where a particular feature is disclosed in the context of a particular aspect, arrangement, configuration, or embodiment, that feature can also be used, to the extent possible, in combination with and/or in the context of other particular aspects, arrangements, configurations, and embodiments of the invention, and in the invention generally.

Furthermore, although the invention disclosed herein has been described with reference to particular features, it is to be understood that these features are merely illustrative of the principles and applications of the present invention. It is therefore to be understood that numerous modifications may be made to the illustrative embodiments and that other arrangements may be devised without departing from the scope of the present invention. In this regard, the present invention encompasses numerous additional features in addition to those specific features set forth in the claims below.

## Claims

1. A method of assessing and controlling a fabrication of a build structure by an additive layer manufacturing machine, comprising the steps of:
setting a first layer of a first material over a substrate, an entirety of the first layer of the first material when set over the substrate having a first height in a first direction orthogonal to a plane defined by the substrate;
selectively heating the first layer of the first material with a first high energy beam to form a first formed layer of a build structure;
generating a first image of a predefined region of the first formed layer, the first image depicting one or more topographical characteristics within the predefined region of the first formed layer;
setting a subsequent layer of the first material or a second material different from the first material over the first formed layer, an entirety of the subsequent layer having a second height different from the first height in the first direction, the second height being determined based on the depicted topographical characteristics; and
selectively heating the subsequent layer with the first high energy beam or a second high energy beam to form a subsequent formed layer of the build structure over the first formed layer.

2. The method of claim 1, wherein the one or more depicted topographical characteristics result from applied energy magnitudes of energy applied by the first high energy beam within the predefined region of the first formed layer.

3. The method of claim 1 or claim 2, wherein the substrate is a platform moveable relative to a fixed platform, and further comprising the steps of:
lowering the substrate a first distance relative to the fixed platform to a first position, the substrate being at the first position during the steps of setting the first layer of the first material over the substrate and selectively heating the first layer of the first material over the substrate; and
lowering the substrate a second distance relative to the fixed platform and different from the first distance to a second position, the substrate being at the second position during the steps of setting the subsequent layer over the first formed layer and selectively heating the subsequent layer over the first formed layer.

4. The method of any one of claims 1-3, wherein the first high energy beam is directed from a first energy beam source having a first energy beam setting during the step of selectively heating the first layer of the first material, further comprising the step of:
altering the first energy beam setting of the first energy beam source to a second energy beam setting of the first energy beam source based on the first image, wherein the first high energy beam is directed from the first energy beam source having the second energy beam setting during the step of selectively heating the subsequent layer.

5. The method of any one of claims 1-3, wherein the first high energy beam is directed from a first energy beam source having a first power during the step of selectively heating the first layer and the second high energy beam is directed from the first energy beam source or a second energy beam source during the step of selectively heating the subsequent layer and having a second power during the step of selectively heating the subsequent layer.

6. The method of any one of claims 1-3, wherein the first high energy beam is directed from a first energy beam source having a first scan speed setting corresponding to a first scan speed of the first high energy beam during the step of selectively heating the first layer and the second high energy beam is directed from the first energy beam source or a second energy beam source, the second high energy beam having a second scan speed setting corresponding to a second scan speed of the second high energy beam during the step of selectively heating the subsequent layer.

7. The method of any one of claims 1-3, wherein the first high energy beam is directed from a first energy beam source having a combination of a first scan speed setting corresponding to a first scan speed of the first high energy beam and one or more first power input settings corresponding at least in part to a first power provided by the first energy beam source during the step of selectively heating the first layer, and wherein the second high energy beam is directed from the first energy beam source or a second energy beam source, the second high energy beam having a combination of a second scan speed setting corresponding to a second scan speed of the second high energy beam and one or more second power input settings corresponding at least in part to a second power provided by the one of the first energy beam source or the second energy beam source from which the second high energy beam is directed during the step of selectively heating the subsequent layer.

8. The method of any one of claims 1-3, wherein the first high energy beam is directed from a first energy beam source having a first energy beam setting during the step of selectively heating the first layer and the second high energy beam is directed from the first energy beam source or a second energy beam source during the step of selectively heating the subsequent layer, further comprising the steps of:
comparing, automatically via a computer processor, a first image intensity value corresponding to one of the one or more depicted topographical characteristics within a first predefined area of the first image to a first preset intensity value; and
setting, automatically via a computer processor, the second energy beam setting based on a difference between the first image intensity value and the first preset intensity value.

9. The method of any one of claims 1-3, wherein the first high energy beam is directed from a first energy beam source having a first energy beam setting during the step of selectively heating the first layer and the second high energy beam is directed from the first energy beam source or a second energy beam source during the step of selectively heating the subsequent layer, further comprising the steps of:
determining, automatically via a computer processor, a first image intensity value corresponding to one of the one or more depicted topographical characteristics within a first predefined area of the first image; and
setting, automatically via a computer processor, the second energy beam setting based on the first image intensity value.

10. The method of any one of claims 1-3, further comprising the steps of:
comparing, automatically via a computer processor, a first image intensity value corresponding to one of the one or more depicted topographical characteristics within a first predefined area of the first image to a first preset intensity value; and
setting, automatically via a computer processor, the second height based on a difference between the first image intensity value and the first preset intensity value.

11. The method of any one of claims 1-3, further comprising the steps of:
determining, automatically via a computer processor, a first image intensity value corresponding to one of the one or more depicted topographical characteristics within a first predefined area of the first image; and
setting, automatically via a computer processor, the second height based on the first image intensity value.

12. The method of any one of claims 1-11, wherein the step of setting the first layer of the first material over the substrate includes setting the first material over a prior layer or prior layers of additional material overlying the substrate.

13. The method of any one of claims 1-12, wherein the formed first layer is an initial formed layer of the build structure or an intermediate formed layer of the build structure.

14. The method of any one of claims 1-13, wherein the subsequent layer is formed directly on the first formed layer.

15. A method of assessing and controlling a fabrication of a build structure by an additive layer manufacturing machine, comprising the steps of:
setting a first layer of a material onto or over a substrate, an entirety of the first layer of material having a first height as measured in a first direction;
selectively heating the first layer of the material with a first high energy beam to form a first formed layer of a build structure;
setting a second layer of the material onto the first formed layer, an entirety of the second layer of the material having the first height in the first direction;
setting a further layer of the material onto or over the second layer of the material without directing a high energy beam onto the second layer, an entirety of the further layer of the material having the first height in the first direction;
selectively heating the further layer of the material with the first high energy beam or a second high energy beam to form a subsequent formed layer of the build structure attached to the first formed layer.
